(19) Europäisches Patentamt
European Patent Office
Office européen des brevets

(11) **EP 3 174 319 B1**

(12) **EUROPEAN PATENT SPECIFICATION**

(45) Date of publication and mention
of the grant of the patent:
**13.11.2019 Bulletin 2019/46**

(21) Application number: **14881844.6**

(22) Date of filing: **22.10.2014**

(51) Int Cl.:
*H04W 4/02* *(2018.01)*       *H04W 64/00* *(2009.01)*
*G01S 5/02* *(2010.01)*       *H04W 84/12* *(2009.01)*
*H04W 4/021* *(2018.01)*      *H04W 4/029* *(2018.01)*
*H04W 4/33* *(2018.01)*

(86) International application number:
**PCT/CN2014/089213**

(87) International publication number:
**WO 2015/117396 (13.08.2015 Gazette 2015/32)**

(54) **WI-FI SIGNAL-BASED POSITIONING METHOD, DEVICE, AND SYSTEM**

VERFAHREN, VORRICHTUNG UND SYSTEM ZUR POSITIONIERUNG AUF BASIS VON WI-FI-SIGNALEN

PROCÉDÉ, DISPOSITIF ET SYSTÈME DE POSITIONNEMENT EN FONCTION DE SIGNAL WI-FI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2014 CN 201410419736**

(43) Date of publication of application:
**31.05.2017 Bulletin 2017/22**

(73) Proprietor: **ZTE Corporation**
**Shenzhen, Guangdong 518057 (CN)**

(72) Inventor: **GAO, Jian**
**Shenzhen**
**Guangdong 518057 (CN)**

(74) Representative: **J A Kemp LLP**
**14 South Square**
**Gray's Inn**
**London WC1R 5JJ (GB)**

(56) References cited:
**WO-A2-2013/188717       CN-A- 102 802 258**
**CN-A- 103 747 524       CN-A- 103 796 163**
**CN-A- 103 841 642       CN-A- 103 888 900**
**US-A1- 2012 244 875**

**Description**

Technical Field

The present document relates to the field of WiFi signal-based positioning, in particular to a WiFi signal-based positioning method, device and system.

Background

In WiFi-based indoor positioning technologies in the prior art, a comparatively mainstream in the industry at present is to adopt a fingerprint positioning method to realize indoor positioning. The fingerprint positioning method refers to a method that extraction and collection of WiFi signal features need to be performed before positioning, a "signal strength map" (fingerprint database) is drawn, received WiFi signals are compared with WiFi signals in the "signal strength map" when a user needs positioning, and thus the location of the user can be matched. When the fingerprint database is drawn, the longer the signal acquisition time is and the more the acquisition points is, the more accurate the fingerprint database is and the more beneficial it is to the improvement of positioning accuracy. However, at the same time, the time cost and the expenses are greater, and thereby service expenses charged for positioning service provided to merchants are naturally greater. Such great service expenses are difficult to accept for most merchants. In addition, although such method can provide high-accuracy positioning information, errors exist in judgment of floors during indoor positioning and this is unacceptable for merchants. Imaginarily, if a shop of a merchant is actually located at the fifth floor but the positioning location provided to a user is identified as the fourth floor, under such situation, although the positioning accuracy is within 5m, the user at the fourth floor cannot find the specific location of the merchant at the fifth floor and thereby the significance of positioning is lost.

The document US20120244875A1 describes a method and apparatus for determining the location of a device with the assistance of fixed receivers.

The document WO2013188717A2 describes systems, methods and devices for application of location based services in a venue using mobile centric and network centric positioning techniques.

The document CN103841642A describes real-time determination of a location of a terminal in indoor environment.

The document CN103796163A describes matching of a MAC address in a database of location fingerprints with a corresponding RSSI value.

Summary

The technical problem to be solved by the present document is to provide a WiFi signal-based positioning method, device and system, which can provide location label information to users based on WiFi signals.

The embodiment of the present invention provides a method according to claim 1, a device according to claim 3, a system according to claim 5, a computer program according to claim 6 and a carrier according to claim 7. Further improvements and embodiments are provided in the dependent claims.Also provided is a WiFi signal-based positioning method, including:

receiving a positioning request of a user, the positioning request including WiFi signal information of a current location of the user;

acquiring location label information of the current location of the user according to the WiFi signal information; and

sending the acquired location label information to the user.

Alternatively, before the step of receiving the positioning request of the user, the positioning method further includes:
receiving and saving registration information of the user sent through a mobile network or a WiFi network, the registration information at least including a username, a user password, a user type and a location label of the user.

Alternatively, after the step of receiving and saving the registration information of the user, the positioning method further includes:

receiving login information of the user sent through the mobile network or the WiFi network, the login information carrying a wireless router MAC address of a WiFi signal detected by the user; and

storing a corresponding relationship between the location label of the user and the wireless router MAC address.

Alternatively, the login information further includes a location label modified by the user; and

the step of storing the corresponding relationship between the location label of the user and the wireless router MAC address includes:
storing a corresponding relationship between the location label modified by the user and the wireless router MAC address.

Alternatively, the location label includes:

city name + area name + community name + room number; or

city name + area name + commercial street name + commercial building name + shop number + shop name.

Alternatively, the WiFi signal information includes a WiFi signal accessed by the user; and

the step of acquiring the location label information of the current location of the user according to the WiFi signal information includes:

acquiring a wireless router MAC address corresponding to the WiFi signal accessed by the user;

searching for a corresponding relationship between the wireless router MAC address and the location label; and

determining the location label corresponding to the wireless router MAC address to be the location label information of the current location of the user.

Alternatively, the WiFi signal information includes at least one WiFi signal detected by the user; and
the step of acquiring the location label information of the current location of the user according to the WiFi signal information includes:

measuring signal strength of the WiFi signal and acquiring a corresponding wireless router MAC address according to the at least one WiFi signal detected by the user; and

searching for a corresponding relationship between the wireless router MAC address and the location label according to the signal strength of the WiFi signal and the wireless router MAC address to obtain the location label information of the current location of the user, the location label information including location label + offset.

Also provided is a WiFi signal-based positioning device, including a receiving module, an acquisition module and a sending module, herein:

the receiving module is arranged to receive a positioning request of a user, the positioning request including WiFi signal information of a current location of the user;

the acquisition module is arranged to acquire location label information of the current location of the user according to the WiFi signal information; and

the sending module is arranged to send the acquired location label information to the user.

Alternatively, the positioning device further includes a registration module, herein:
the registration module is arranged to receive and save registration information of the user sent through a mobile network or a WiFi network, the registration information at least including a username, a user password, a user type and a location label of the user.
Alternatively, the positioning device further includes a login module, herein:
the login module is arranged to receive login information of the user sent through the mobile network or the WiFi network and store a corresponding relationship between the location label of the user and the wireless router MAC address, herein the login information carries a wireless router MAC address of a WiFi signal detected by the user.
Alternatively, the login information further includes a location label modified by the user; and

the device further includes an update module, herein:
the update module is arranged to store a corresponding relationship between the location label modified by the user and the wireless router MAC address.

Alternatively, the location label includes:

$$city\ name + area\ name + community\ name + room\ number;$$

or

$$city\ name + area\ name + commercial\ street\ name + commercial\ building\ name + shop$$

$$number + shop\ name.$$

Alternatively, the WiFi signal information includes a WiFi signal accessed by the user; and
the acquisition module is arranged to acquire the location label information of the current location of the user according to the WiFi signal information according to the following mode:

acquiring a wireless router MAC address corresponding to the WiFi signal accessed by the user;

searching for a corresponding relationship between the wireless router MAC address and the location label; and

determining the location label corresponding to the wireless router MAC address to be the location label information of the current location of the user.

Alternatively, the WiFi signal information includes at least one WiFi signal detected by the user; and
the acquisition module is arranged to acquire the location label information of the current location of the user according to the WiFi signal information according to the following mode:

measuring signal strength of the WiFi signal and acquiring a corresponding wireless router MAC address according to the at least one WiFi signal detected by the user; and

searching for a corresponding relationship between the wireless router MAC address and the location label according to the signal strength of the WiFi signal and the wireless router MAC address to obtain the location label information of the current location of the user, the location label information including location label + offset.

Also provided is a WiFi signal-based positioning system, including a client and a Location-Based Service LBS positioning management platform, herein:

the client is arranged to send a positioning request of a user to the LBS positioning management platform; and

the LBS positioning management platform is arranged to receive the positioning request of the user, acquire location label information of a current location of the user according to the WiFi signal information and send the acquired location label information to the user through the client, herein the positioning request includes WiFi signal information of the current location of the user.

Alternatively, the client is further arranged to send registration information or login information of the user to the LBS positioning management platform through a mobile network or a WiFi network, herein the registration information at least includes a username, a user password, a user type and a location label of the user, and the login information carries a wireless router MAC address of a WiFi signal detected by the user;
the LBS positioning management platform is further arranged to receive the registration information or the login information and establish a corresponding relationship between the location label of the user and the wireless router MAC address; and
the system further includes an LBS positioning service database, herein:
the LBS positioning service database is arranged to store the corresponding relationship between the location label of the user and the wireless router MAC address.

Alternatively, the login information further includes a location label modified by the user;

**EP 3 174 319 B1**

the LBS positioning management platform is further arranged to establish a corresponding relationship between the location label modified by the user and the wireless router MAC address; and

the LBS positioning service database is further arranged to store the corresponding relationship between the location label modified by the user and the wireless router MAC address.

Also provided is a computer program, including program instructions, which, when executed by a WiFi signal positioning device, enable the WiFi signal positioning device to be capable of executing the above-mentioned WiFi signal positioning method.

Also provided is a carrier, carrying the above-mentioned computer program.

The embodiment of the present document has the following beneficial effects:

In the above-mentioned solution, the positioning request, including the WiFi signal information of the current location of the user, of the user is received, the location label information of the current location of the user is acquired according to the WiFi signal information and the acquired location label information is sent to the user. The technical solution provided by the present document positions the user based on the WiFi signal information and provides the location label information of the location to the user. More importantly, the LBS management platform can provide various application services based on location labels, various positioning-based demands of the user can be satisfied, so that the user not only can acquire specific accurate geographical location information at a low cost, but also can subscribe required various applications based on location services.

Brief Description of Drawings

FIG. 1 illustrates a flowchart of a WiFi signal-based positioning method according to the embodiment of the present document.

FIG. 2 illustrates a structural block diagram of a WiFi signal-based positioning device according to the embodiment of the present document.

FIG. 3 illustrates a structural schematic diagram of a WiFi signal-based positioning system according to the embodiment of the present document.

FIG. 4 illustrates a flowchart that a user performs LBS registration through a client according to the embodiment of the present document.

FIG. 5 illustrates a flowchart that a user performs LBS login through a client according to the embodiment of the present document.

FIG. 6 illustrates a flowchart that a user makes an LBS positioning request through a client according to the embodiment of the present document.

FIG. 7 illustrates a flowchart of a WiFi signal access mode-based positioning method according to the embodiment of the present document.

FIG. 8 illustrates a flowchart of a WiFi signal detection mode-based positioning method according to the embodiment of the present document.

Detailed Description

The present document will be described below in detail with reference to the accompanying drawings in combination with the specific embodiments.

The embodiment of the present document provides a WiFi signal-based positioning method, device and system, which can provide location label information to users based on WiFi signals.

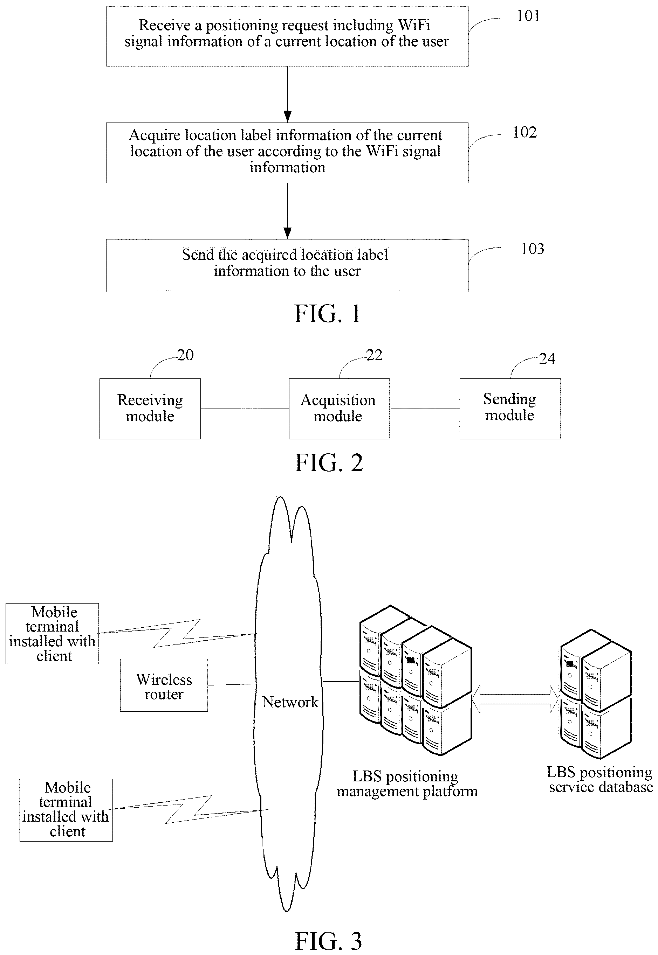

FIG. 1 illustrates a flowchart of a WiFi signal-based positioning method according to the embodiment of the present document. As illustrated in FIG. 1, the embodiment includes:

In step 101, a positioning request of a user is received, and herein the positioning request includes WiFi signal information of a current location of the user.

In step 102, location label information of the current location of the user is acquired according to the WiFi signal information.

5

In step 103, the acquired location label information is sent to the user.

According to the WiFi signal-based positioning method, the positioning request, including the WiFi signal information of the current location of the user, of the user is received, the location label information of the current location of the user is acquired according to the WiFi signal information and the acquired location label information is sent to the user. The technical solution provided by the present document positions the user based on the WiFi signal information and provides the location label information of the location to the user. More importantly, the present document can provide various application services based on location labels, various positioning-based demands of the user can be satisfied, so that the user not only can acquire specific accurate geographical location information at a low cost, but also can subscribe required various applications based on location services.

Alternatively, in another embodiment of the present document, on the basis that the method includes the above-mentioned steps, before the positioning request of the user is received, the method further includes:
receiving and saving registration information of the user sent through a mobile network or a WiFi network, herein the registration information at least includes a username, a user password, a user type and a location label of the user.

Alternatively, in another embodiment of the present document, on the basis that the method includes the above-mentioned steps, after the registration information of the user is received and saved, the method further includes:

receiving login information of the user sent through the mobile network or the WiFi network, herein the login information carries a wireless router MAC address of a WiFi signal detected by the user; and

storing a corresponding relationship between the location label of the user and the wireless router MAC address.

Alternatively, the login information further includes a location label modified by the user; and the storing a corresponding relationship between the location label of the user and the wireless router MAC address includes:
storing a corresponding relationship between the location label modified by the user and the wireless router MAC address. Alternatively, in another embodiment of the present document, on the basis that the method includes the above-mentioned steps, the location label includes city name + area name + community name + room number, city name + area name + commercial street name + commercial building name + shop number + shop name.

Alternatively, in another embodiment of the present document, on the basis that the method includes the above-mentioned steps, the WiFi signal information includes a WiFi signal accessed by the user; and the operation that the location label information of the current location of the user is acquired according to the WiFi signal information includes:

acquiring a wireless router MAC address corresponding to the WiFi signal accessed by the user;

searching for a corresponding relationship between the wireless router MAC address and the location label; and

determining the location label corresponding to the wireless router MAC address to be the location label information of the current location of the user.

Alternatively, in another embodiment of the present document, on the basis that the method includes the above-mentioned steps, the WiFi signal information includes at least one WiFi signal detected by the user; and the operation that the location label information of the current location of the user is acquired according to the WiFi signal information includes:

measuring signal strength of the WiFi signal and acquiring a corresponding wireless router MAC address according to the at least one WiFi signal detected by the user; and

searching for a corresponding relationship between the wireless router MAC address and the location label according to the signal strength of the WiFi signal and the wireless router MAC address to obtain the location label information of the current location of the user, herein the location label information includes location label + offset.

FIG. 2 illustrates a structural block diagram of a WiFi signal-based positioning device according to the embodiment of the present document. As illustrated in FIG. 2, the embodiment includes:

a receiving module 20 used for receiving a positioning request of a user, herein the positioning request includes WiFi signal information of a current location of the user;

an acquisition module 22 used for acquiring location label information of the current location of the user according to the WiFi signal information; and

a sending module 24 used for sending the acquired location label information to the user.

According to the WiFi signal-based positioning device provided by the present document, the positioning request, including the WiFi signal information of the current location of the user, of the user is received, the location label information of the current location of the user is acquired according to the WiFi signal information and the acquired location label information is sent to the user. The technical solution provided by the present document positions the user based on the WiFi signal information and provides the location label information of the location to the user. More importantly, an LBS management platform can provide various application services based on location labels, various positioning-based demands of the user can be satisfied, so that the user not only can acquire specific accurate geographical location information at a low cost, but also can subscribe required various applications based on location services.

Alternatively, the device further includes:

a registration module used for receiving and saving registration information of the user sent through a mobile network or a WiFi network, herein the registration information at least includes a username, a user password, a user type and a location label of the user.

Alternatively, the device further includes:

a login module used for receiving login information of the user sent through the mobile network or the WiFi network, herein the login information carries a wireless router MAC address of a WiFi signal detected by the user, and storing a corresponding relationship between the location label of the user and the wireless router MAC address.

Specifically, on the premise that the user can detect a WiFi signal, the login module receives login information initiated by the user through the mobile network or the WiFi network; in case of login through WiFi access and in a house or shop mode, the login information at least includes a username, a user password, a login type and an MAC address of the accessed WiFi signal, firstly authentication is performed, then a location label is queried according to the username, a corresponding relationship between a first wireless router MAC address of the WiFi signal and the location label is stored, a user login state is saved and a login success response is fed back to the user; and in case of login through WiFi access and in other modes or login through a WiFi detection mode, the login information at least includes a username, a user password and a login type, at this moment the platform only completes authentication, a user login state is saved and a login success response is fed back to the user.

Alternatively, the login information further includes a location label modified by the user; and the device further includes:

an update module used for storing a corresponding relationship between the location label modified by the user and the wireless router MAC address.

Alternatively, the location label includes city name + area name + community name + room number, city name + area name + commercial street name + commercial building name + shop number + shop name.

Alternatively, the WiFi signal information includes a WiFi signal accessed by the user; and the acquisition module is specifically used for:

acquiring a wireless router MAC address corresponding to the WiFi signal accessed by the user;

searching for a corresponding relationship between the wireless router MAC address and the location label; and

determining the location label corresponding to the wireless router MAC address to be the location label information of the current location of the user.

Alternatively, the WiFi signal information includes at least one WiFi signal detected by the user; and the acquisition module is specifically used for:

measuring signal strength of the WiFi signal and acquiring a corresponding wireless router MAC address according to the at least one WiFi signal detected by the user; and

searching for a corresponding relationship between the wireless router MAC address and the location label according to the signal strength of the WiFi signal and the wireless router MAC address to obtain the location label information of the current location of the user, herein the location label information includes location label + offset.

FIG. 3 illustrates a structural block diagram of a WiFi signal-based positioning system according to the embodiment of the present document. As illustrated in FIG. 3, the WiFi signal-based positioning system includes:

a client used for sending a positioning request of a user to a Location-Based Service LBS positioning management platform; and

the LBS positioning management platform used for receiving the positioning request of the user, herein the positioning request includes WiFi signal information of the current location of the user, acquiring location label information of a current location of the user according to the WiFi signal information and sending the acquired location label information to the user through the client.

In this embodiment of the present document, the LBS positioning management platform receives the positioning request, including the WiFi signal information of the current location of the user, of the user, acquires the location label information of the current location of the user according to the WiFi signal information and sends the acquired location label information to the user. The technical solution provided by the present document positions the user based on the WiFi signal information and provides the location label information of the location to the user. More importantly, the present document can provide various application services based on location labels, various positioning-based demands of the user can be satisfied, so that the user not only can acquire specific accurate geographical location information at a low cost, but also can subscribe required various applications based on location services.

Alternatively, the client is further used for sending registration information or login information of the user to the LBS positioning management platform through a mobile network or a WiFi network, herein the registration information at least includes a username, a user password, a user type and a location label of the user, and the login information carries a wireless router MAC address of a WiFi signal detected by the user;

the LBS positioning management platform is further used for receiving the registration information or the login information and establishing a corresponding relationship between the location label of the user and the wireless router MAC address; and

the system further includes:

an LBS positioning service database used for storing the corresponding relationship between the location label of the user and the wireless router MAC address.

Alternatively, the login information further includes a location label modified by the user;

the LBS positioning management platform is further used for establishing a corresponding relationship between the location label modified by the user and the wireless router MAC address; and

the LBS positioning service database is further used for storing the corresponding relationship between the location label modified by the user and the wireless router MAC address.

The WiFi signal-based positioning method provided by the present document will be further described below with reference to the accompanying drawings in combination with the specific embodiments.

With the development of the positioning technology, what is needed by merchants is that certain commercial value can be obtained through positioning services. For example, if discount information of a Haagen-Dazs shop located at the east gate of a certain large shopping mall needs to be known by customers at the west gate, the Haagen-Dazs merchant uses the positioning service to push the commercial information and merchant address to users close to the shopping mall, the merchant address described here is not certainly an accurate reaching path on a mobile phone map and may also be merchant location label information which can be directly understood by users (e.g., certain shopping mall - left side of east gate - Haagen-Dazs - merchant number). What is needed by users is that convenience brought by location services can be enjoyed through positioning services. For example, if a user wants to visit a friend, under the situation that there is no address, the accurate location of the friend may be acquired through indoor positioning (there may be a deviation in floor). However, in fact, it is enough for the user to acquire a building number + room number location label.

To sum up, regardless of most shop users in commercial streets and individual house users in large communities, the demand for positioning may be just the acquisition of location label information (e.g., city name + area name + commercial street name + shop number + shop name +..), and it is not needed to acquire specific accurate geographical location information at a high cost.

The present document provides a WiFi signal-based positioning method and provides house and commercial street positioning service solutions respectively aiming at a WiFi signal access fixed location user positioning application scenario and a WiFi signal detection moving location user positioning application scenario, and thereby user indoor positioning and location-based service functions are realized at a lower cost.

The technical solution of the present document does not need to carry out any special reconstruction to the existing WiFi wireless network at all. With the development trend of big data time, WiFi wireless router network devices in city comprehensive residential areas and commercial street areas will increase rapidly, an LBS positioning management platform can continuously improve core positioning data, i.e., location label information of a positioning system through the cultivation of the number of users and the continuous increase of wireless routers, so as to continuously improve the positioning success rate and accuracy of the positioning system. With the improvement of the positioning success rate and accuracy, more and more people will use the present positioning system. At the same time, more and more application providers will develop more location service applications with commercial values based on the LBS positioning management platform, and thereby the positioning system will form a benign ecological positioning system.

FIG. 3 illustrates a structural schematic diagram of a WiFi signal-based positioning system according to the present document. As illustrated in FIG. 3, the WiFi signal-based positioning system includes:
a client installed on mobile terminals, herein a client module is an acquisition point of location information labels and terminal software that provides location-based services, and thus has the following functions:

(1) providing a user registration function on the premise of user trust, requiring users to provide real user information at a cost of providing partial free location services to users, herein real house location label information or shop location label information is included;

(2) the function of collecting and saving user location information, and reporting to an LBS positioning management platform;

(3) the function of detecting WiFi networks, measuring and computing the signal strength of the WiFi networks and unique identification code MAC addresses of wireless routers;

(4) the function of accessing the WiFi networks through mobile terminals and acquiring the unique identification code MAC addresses of the wireless routers thereof;

(5) the function of associating user location information labels with the unique identification code MAC addresses of the WiFi wireless routers to establish a corresponding relationship, and reporting to the LBS positioning management platform;

(6) the function of adding friends and setting user location visibility authorities;

(7) the function of sending location application service requests to the LBS positioning management platform; and

(8) the function of providing periodic acquisition requests of user location information in a positioning mode based on WiFi signal detection.

The client can access WiFi networks through wireless routers.
The LBS positioning service management, herein the LBS positioning management platform is a core of the entire system and mainly has the following functions:

(1) making private protocols and providing interfaces for message interaction with the client;

(2) the function of receiving and processing registration requests, login requests and various location service requests reported by the client;

(3) managing and maintaining the location information labels reported by the users through the client, mainly including newly adding, changing and deleting the location information labels;

(4) providing the users with location services such as a function of sharing location information labels to friends, and searching for information of parking lots of commercial areas where the users are;

(5) providing users close to shops with shop information pushing and commercial information release functions;

(6) providing users with authority management of location service businesses; and

(7) providing interfaces for communication with an LBS positioning service database, so as to send data which need to be saved to the LBS positioning service database for recording.

The LBS positioning service database, herein the LBS positioning service database mainly provides the following functions:

(1) providing an interface for communication with the LBS positioning management platform such that the LBS positioning management platform stores necessary positioning service information;

(2) saving a corresponding relationship between location information labels and wireless router MAC addresses;

(3) saving individual house user and shop user information and corresponding location service application authorities; and

(4) saving information of friends of users.

In the present document, on the basis of user trust and the number of users, by guiding users to complete the location label information of the LBS positioning management platform during use at a cost of providing partial free location services for users, when the location information provided by the users and the number of the users reach a certain extent, the accurate location label positioning service function of large residential communities or commercial streets can be realized at a minimized cost, the cost minimization is achieved when to analyze in view of cost, the user experience is improved at the same time, it is a benign cyclic system which realizes the service development of the LBS positioning management platform under the drive of the increase of the number of the users, and after the LBS positioning management platform is mature, various location-based individualized application services can be provided for various users.

Embodiment one

This embodiment provides a WiFi access mode-based location label positioning method. This embodiment is suitable for positioning services of users at fixed locations.

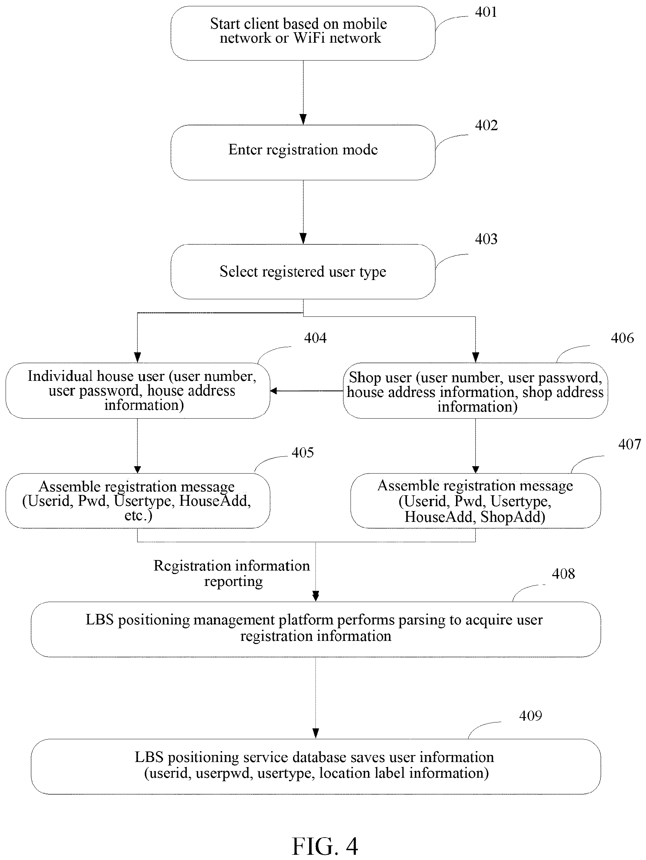

In this embodiment, a client mainly provides an individual house user and shop user registration function, an individual and shop user login function, a location label information collection function, a WiFi signal access positioning service function and a function of communicating with the LBS positioning management platform based on private protocol interfaces. A registration process is as illustrated in FIG. 4 and includes the following steps.

In step 401, a client is started based on a mobile network or a WiFi network.

In step 402, a registration mode is entered.

In step 403, a registered user type is selected.

In step 404, if a registered user is an individual user, registration information includes a user number, a user password and house address information.

In step 405, a registration message is assembled.

In step 406, if a registered user is a shop user, registration information includes a user number, a user password, house address information and shop address information.

In step 407, a registration message is assembled.

In step 408, an LBS positioning management platform parses to acquire user registration information.

In step 409, an LBS positioning service database saves user information.

An individual house user may register individual house user information through a client under a mobile network (2G/3G/4G) or a WiFi wireless network, and the client provides two types of registration modes including an individual house user registration mode and a shop user registration mode. Individual house user registration includes the filling of the following information of the user: a user mobile phone number, a user login password, a user type (0: individual house user), user house location label information (required), etc. Shop user registration includes the filling of the following information of the user: a shop user mobile phone number, a shop user login password, a user type (1: shop user), user house location label information (optional), user's shop location label information (required), etc. Herein, a user house location label information format is similar to "city name - area name - community name - room number", and a shop location label information format is similar to "city name + area name + commercial street name + commercial building name + shop number + shop name". Here, one point which needs to be further emphasized is that the technical solution of the present document is designed based on user trust. Therefore, the client considers that location label information filled by the user is real and effective, the client reports the real user registration information to the LBS positioning management platform through an assembled registration message and receives a registration success response fed back by the LBS positioning management platform, the LBS positioning management platform parses the registration message to acquire registration information, and the LBS positioning service database saves the user information (herein userid is user mobile phone number, userpwd is user login password and user is user type).

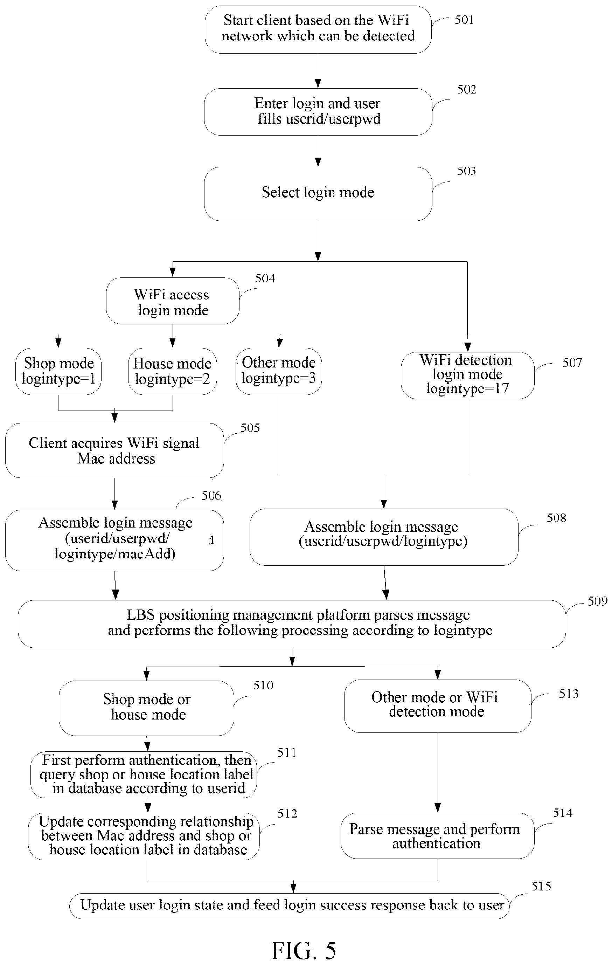

FIG. 5 illustrates a flowchart that a user performs LBS login through a client. As illustrated in FIG. 5, the process specifically includes the following steps.

In step 501, a client is started based on that a WiFi network can be detected.

In step 502, login is entered and a user fills a user number and a user password.

In step 503, a login mode is selected.

In step 504, a WiFi access login mode includes a shop mode, a house mode and other modes.

In step 505, the client acquires a MAC address of a WiFi signal.

In step 506, a login message is assembled.

EP 3 174 319 B1

In step 507, a WiFi detection login mode is entered.

In step 508, a login message is assembled.

In step 509, an LBS positioning management platform parses the message and performs processing according to a login type.

In step 510, a shop mode or a house mode is entered.

In step 511, authentication is firstly performed and then a shop or house location label is queried in a database according to the user number.

In step 512, a corresponding relationship between the MAC address and the shop or house location label in the database is updated.

In step 513, other modes or a WiFi detection mode is entered.

In step 514, a message is parsed and authentication is performed.

In step 515, a user login state is updated and a login success response is fed back to the user.

On a premise that a user can detect a WiFi signal, the user initiates login information through a mobile network or a WiFi network. In case of WiFi access and login in the house or shop mode, the login information includes at least a user number, a user password, a login type and an MAC address of an accessed WiFi signal, firstly authentication is performed, then a location label is queried according to the user number, a corresponding relationship between the wireless router MAC address of the WiFi signal and the location label is stored, a user login state is saved and a login success response is fed back to the user; and in case of WiFi access and login in other modes or in a WiFi detection mode, the login information includes at least a username, a user password and a login type, and at this moment the platform only completes authentication, saves a user login state and feeds back a login success response to the user.

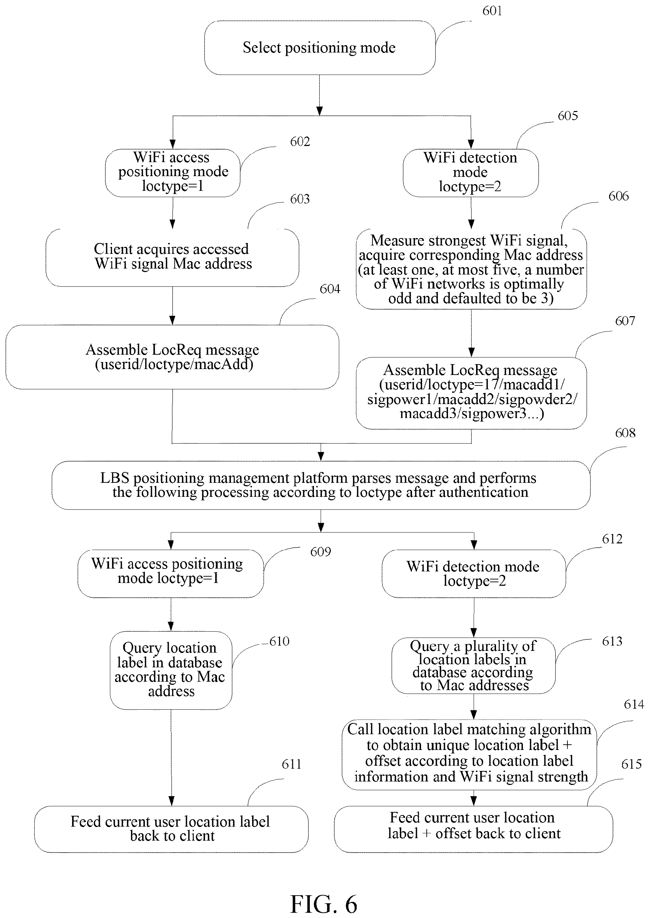

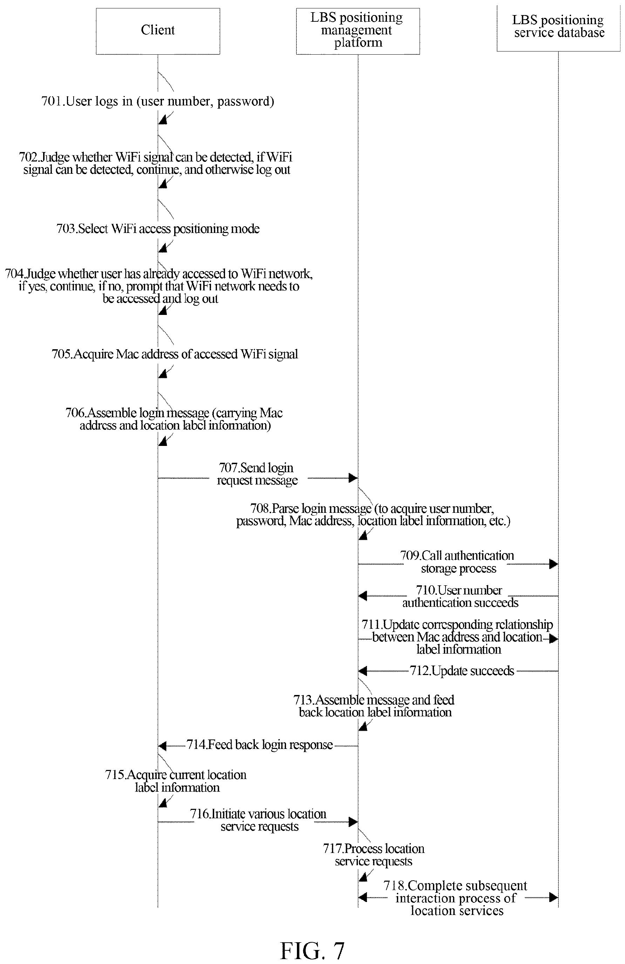

A process of a WiFi access mode-based location label positioning method provided by this embodiment is as illustrated in FIG. 6 and FIG. 7. As illustrated in FIG. 6, the process includes the following steps.

In step 601, a positioning mode is selected.

In step 602, a WiFi access positioning mode is entered.

In step 603, a client acquires a MAC address of an accessed WiFi signal.

In step 604, a login message is assembled.

In step 605, a WiFi detection mode is entered.

In step 606, the strongest WiFi signal is measured and a corresponding MAC address is acquired.

In step 607, a login message is assembled.

In step 608, an LBS positioning management platform parses the message, and performs the following processing according to a login type after authentication.

In step 609, a WiFi access positioning mode is entered.

In step 610, a location label is queried in a database according to the MAC address.

In step 611, a current location label is fed back to the client.

In step 612, a WiFi detection mode is entered.

In step 613, a plurality of location labels are queried in the database according to the MAC address.

In step 614, a location label matching algorithm is called according to location label information and WiFi signal strength to obtain a unique location label + offset.

In step 615, a current location label + offset of the user are fed back to the client.

Alternatively, in an actual application scenario, the process of the location label positioning method in the WiFi access mode is as illustrated in FIG. 7 and includes the following steps.

In step 701, a user logs in.

In step 702, whether a WiFi signal can be detected is judged, if a WiFi signal is detected, a continuous operation is performed, and otherwise, the user logs out.

In step 703, a WiFi access positioning mode is selected.

In step 704, whether the user has already accessed to a WiFi network is judged, if yes, a continuous operation is performed, and if no, a prompt that a WiFi network needs to be accessed is given and the user logs out.

In step 705, a MAC address of an accessed WiFi signal is acquired.

In step 706, a login message (carrying the MAC address and location label information) is assembled.

In step 707, a login request message is sent.

In step 708, the login message is parsed to acquire the user number, the password, the MAC address, the location label information and the like.

In step 709, an authentication storage process is called.

In step 710, user number authentication succeeds.

In step 711, a corresponding relationship between the MAC address and the location label information is updated.

In step 712, update succeeds.

In step 713, a message is assembled and location label information is fed back.

In step 714, a login response is fed back.

11

In step 715, current location label information is acquired.

In step 716, various location service requests are initiated.

In step 717, location service request processing is performed.

In step 718, a subsequent interaction process of location services is completed.

An individual or shop user may log in through the client by means of the filled registration information (user mobile phone number and user password). Since this embodiment performs positioning based on WiFi wireless network signals, when the user logs in, the user must be capable of detecting at least one WiFi signal, and a positioning mode including a WiFi access positioning mode and a WiFi detection positioning mode needs to be selected. This embodiment aims at WiFi access mode-based location label positioning. In the WiFi access positioning mode, the user needs to access to a WiFi network before the user logs in the client, and the user needs to select a WiFi network access type including house WiFi access, shop WiFi access and other WiFi access. If a current accessed WiFi network is a WiFi network of a house location label registered by the user, house WiFi access is selected. When the user clicks login, the client acquires a wireless router MAC address according to the accessed WiFi signal and then reports the MAC address to the LBS positioning management platform, and the LBS positioning management platform maintains (newly adds/updates/deletes) a corresponding relationship between the MAC and the house location label information. If a WiFi network which is accessed by the user at current is a shop location label information registered by the user, shop WiFi access is selected, an MAC address of a WiFi wireless router is acquired and reported to the LBS positioning management platform, and the LBS positioning management platform maintains (newly adds/updates/deletes) a corresponding relationship between the MAC and the shop location label information. If both are not, the user selects other WiFi access, a location information query request is reported based on a WiFi wireless router MAC address, and then location label information fed back by the LBS positioning management platform is received. In the above-mentioned three login modes, after login succeeds, the location label information sent by the LBS positioning management platform can be always acquired. At this moment, the user can select basic location services (free services) or advanced location services (paid services) according to the need.

The LBS positioning management platform, here the LBS positioning management platform is a core module of the entire LBS positioning service system and main functions thereof include: user data and positioning data management; message interaction with the client and the private protocol interface of the LBS positioning service database; performing processing on user registration, login and various positioning service processes; computation of user current location information by adopting a specific algorithm according to WiFi signal strength reported by the client, etc. In this embodiment, the LBS positioning management platform firstly receives individual house user and shop user registration requests reported by the client, the LBS positioning management platform performs parsing and acquires individual house user registration information (user number, user login password, house location label information, user type, etc.) and shop user registration information (user number, user login password, house location label information (optional), shop location label information (required), user type, etc.), and registration information is sent to the LBS positioning service database for saving; and a registration success response message is fed back to the client. Then, the login request in the WiFi access positioning mode reported by the client is received, the LBS positioning management platform parses a login request message to acquire information such as user number, user password, WiFi network access type and wireless router MAC address, goes to the LBS positioning service database to perform authentication according to user number, user password and WiFi network access type (house access, shop access and other access), updates a corresponding relationship between the location label information and the MAC address in the WiFi house access or shop access mode after authentication passes, and saves the corresponding relationship in the LBS positioning service database; then a login success response message (carrying current user location label information) is assembled and fed back to the client to realize a positioning function; and in the other access mode of WiFi, the location label information is queried in the LBS positioning service database according to the MAC address, a query result is returned to the client to realize a positioning function, the LBS positioning management platform provides various location-based services to the user, then waits for the client to initiate a location service request and a service fee is charged to the user according to basic services (free) or advanced services (paid). Thereby, the continuous development of customization demands based on location service of the LBS positioning management platform is ensured, the service types of the WiFi-based positioning service system are continuously completed and the LBS positioning management platform keeps a certain number of users.

The LBS positioning service database mainly provides a function of saving effective data necessary for the LBS poisoning process, e.g., saving individual house user information and shop user information for the LBS positioning management platform to perform authentication; saving location label information and wireless router MAC addresses for users to acquire current location information; and saving information of friends of users for users to acquire location information and perform applications such as location share.

Embodiment 2

This embodiment provides a WiFi detection mode-based location label positioning method. This embodiment is suitable for positioning services of users at moving locations.

Through WiFi access mode-based positioning services, core data, i.e., a corresponding relationship between location label information and wireless router MAC addresses can be collected and the fundamental location information data can be provided for positioning services. In WiFi access mode-based positioning services, since MAC addresses and location label information have a one-to-one corresponding relationship, the number of pieces of location label information acquired through a MAC address of accessed WiFi is only one and the accurate location label positioning function of large communities or commercial streets can be realized. However, WiFi access mode-based positioning services also have an obvious defect that a user who needs to use a positioning service must access to a WiFi network, i.e., a premise of using a positioning service is that a user must know a password for access to WiFi signal. This is not difficult for users at fixed locations such as users who go to a party at the home of friends, have meals at restaurants on commercial streets and drink coffee at cafes. However, for users at moving locations, who move nearby commercial streets, it is inconvenient to acquire a WiFi password. However, for merchants, pushing of commercial information to this part of people and other location-based services can create commercial values.

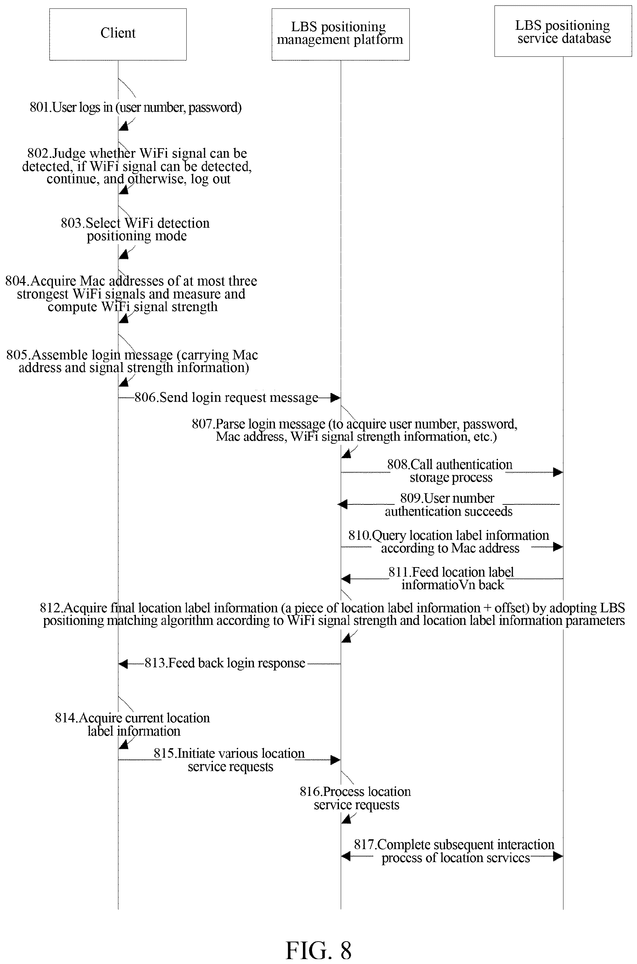

Therefore, this embodiment provides a WiFi detection mode-based location label positioning method, which is suitable for positioning services of users at moving locations. In an actual application scenario, a process of the WiFi detection mode-based location label positioning method is as illustrated in FIG. 8 and includes the following steps:
In step 801, a user logs in.

In step 802, whether a WiFi signal can be detected is judged, if a WiFi signal can be detected, a continuous operation is performed, and otherwise, the user logs out.

In step 803, a WiFi detection positioning mode is selected.

In step 804, MAC addresses of at most three strongest WiFi signals are acquired and WiFi signal strength is measured and computed.

In step 805, a login message (carrying MAC addresses and signal strength information) is assembled.

In step 806, a login request message is sent.

In step 807, the login message is parsed to acquire the user number, the password, the MAC address, the WiFi signal strength information and the like.

In step 808, an authentication storage process is called.

In step 809, user number authentication succeeds.

In step 810, location label information is queried by the MAC address.

In step 811, the location label information is fed back.

In step 812, final location label information (a piece of location label information + offset) is acquired by adopting an LBS positioning matching algorithm according to WiFi signal strength and location label information parameters.

In step 813, a login response is fed back.

In step 814, current location label information is acquired.

In step 815, various location service requests are initiated.

In step 816, location service request processing is performed.

In step 817, a subsequent interaction process of location services is completed.

A WiFi detection positioning mode is selected when a user logs in the client. Under this situation, the client does not require accessed WiFi network information as long as a WiFi signal can be detected, the client collects at most five strongest WiFi signals which are detected, WiFi signal strength and MAC addresses of WiFi signal wireless routers are acquired through measurement and computation, at most five MAC addresses and WiFi signal strength parameters are reported to the LBS positioning management platform, the LBS positioning management platform can obtain current user location label information + offset by querying the LBS positioning service database and positioning location labels matching algorithm, and at this moment, the user can select basic location services (free services) and advanced location services (paid services) according to the needs.

The LBS positioning management platform completes user registration, login and processing of various positioning service processes; and a plurality of location labels are queried according to a plurality of MAC addresses reported by the user, and then current unique location label information and offset of the user are computed according to corresponding WiFi signal strength by adopting a specific algorithm (e.g., a location label matching algorithm). For example, a corresponding relationship between MAC addresses and location labels is queried according to wireless router MAC addresses (supposing there are three MAC addresses) to obtain information of three current user location labels, and a unique location label of the current location of the user is obtained by adopting a location matching algorithm according to signal strength and location label information, and the unique location label includes location label + offset.

For embodiment two, the functions of the LBS positioning management platform are mainly reflected as follows: firstly, functions of user registration and user information management and maintenance are consistent with the functions in embodiment one, and the difference lies in that, when the LBS positioning management platform receives a positioning request reported in a WiFi detection positioning mode, the reported MAC addresses and signal strength (at most five) are parsed, location label information is queried in the LBS positioning service database according to the MAC addresses, and after the LBS positioning management platform obtains the location label information, unique location label information and location offset information fed back by the client are obtained by adopting a positioning location label matching algorithm according to the WiFi signal strength and location label parameter information reported by the user. Then, wait for the client to initiate a location service request and a service fee is charged to the user according to basic services (free) or advanced services (paid).

The LBS positioning service database mainly provides a function of saving effective data necessary for the LBS poisoning process, e.g., saving individual house user information and shop user information for the LBS positioning management platform to perform authentication; saving location label information and wireless router MAC addresses for users to acquire current location information; and saving information of friends of users for users to acquire location information and perform applications such as location share.

By adopting the technical solution provided by the present document, collection of a corresponding relationship between house or commercial street location label information and unique identification code MAC addresses of WiFi wireless routers can be realized, thereby core location data of the LBS positioning management platform are acquired, location positioning of users using the client can be realized through the LBS positioning management platform, rice location application services can be provided to users based on location positioning information, convenience can be brought to people's life to, for example, share locations and acquire information of commercial streets, parking lots and the like nearby locations of users, and communication between people can be enhanced through location application services.

Many function parts described in this description are called as modules to more specially emphasize the independence of the implementation mode thereof.

In the embodiments of the present document, modules may be implemented by means of software to facilitate execution by various types of processors. For example, a marked executable code module may include one or more physical or logic blocks of computer instructions. For example, it can be constructed as an object, a process or a function. Even so, the executable codes of the marked module do not need to be physically located together but may include different instructions stored on different physical blocks, and when these instructions are logically combined together, they form the module and realize the specified purpose of the module.

In fact, the executable code module may be a single instruction or a plurality of instructions, and may be even distributed on a plurality of different code segments, distributed in different programs and distributed across a plurality of memory devices. Similarly, operation data may be identified in the module and may be implemented and organized in any proper type of data structures according to any proper forms. The operation data may be collected as a single dataset, or may be distributed at different locations (including different memory devices), and at least partially may be stored, as electrical signals, on systems or networks.

When modules can be implemented by means of software, in consideration of the level of the existing hardware technology, for modules which can be implemented by means of software, under the situation that the cost is not considered, one skilled in the art can construct corresponding hardware circuits to realize corresponding functions, and the hardware circuits include conventional very-large-scale integrated (VLSI) circuits or gate arrays, and existing semiconductors such as logic chips and transistors or other discrete elements. Modules may also be implemented by means of programmable hardware devices such as field programmable gate arrays and programmable array logic and programmable logic devices.

In the method embodiments of the present document, serial numbers of all steps shall not be used for limiting a sequence of the steps. For one skilled in the art, the modification to the sequence of the steps without contributing any inventive labor shall be also included in the protection scope of the present document.

What are described above are just preferred implementation modes of the present document. It shall be pointed out that one skilled in the art may also make various improvements and modifications without departing from the principle of the present document, and however, such improvements and modifications shall also be considered as included in the protection scope of the present document.

Industrial Applicability

In the above-mentioned solution, the positioning request, including the WiFi signal information of the current location of the user, of the user is received, the location label information of the current location of the user is acquired according to the WiFi signal information and the acquired location label information is sent to the user. The technical solution provided by the present document positions the user based on the WiFi signal information and provides the location label information of the location to the user. More importantly, the LBS positioning management platform can provide various application services based on location labels, various positioning-based demands of the user can be satisfied, and the user not only can acquire specific accurate geographical location information at a low cost, but also can subscribe required various applications based on location services. Therefore, the present document has very strong industrial applicability.

**Claims**

1. A WiFi signal-based positioning method, comprising:

   receiving (101) a positioning request of a user, the positioning request comprising WiFi signal information of a current location of the user;
   the method further comprises:

   acquiring (102) location label information of the current location of the user according to the WiFi signal information; and
   sending (103) acquired location label information to the user;
   wherein,
   the WiFi signal information comprises a WiFi signal accessed by the user; and
   the step of acquiring the location label information of the current location of the user according to the WiFi signal information comprises:

   acquiring (603) a wireless router MAC address corresponding to the WiFi signal accessed by the user;
   searching for a corresponding relationship between the wireless router MAC address and the location label (610); and
   determining the location label corresponding to the wireless router MAC address to be the location label information of the current location of the user (610);
   **characterized in that**,
   before the step of receiving the positioning request of the user, the positioning method further comprises:

   receiving (408) and saving (409) registration information of the user sent through a mobile network or a WiFi network, the registration information comprising at least a username, a user password, a user type and a location label of the user;
   wherein, the location label comprises:

   $$\text{city name} + \text{area name} + \text{community name} + \text{room number};$$

   or

   $$\text{city name} + \text{area name} + \text{commercial street name} + \text{commercial building name} + \text{shop number} + \text{shop name};$$

   after the step of receiving and saving the registration information of the user, the positioning method further comprises:

   receiving (502, 707, 806) login information of the user sent through the mobile network or the WiFi network, the login information carrying a wireless router MAC address of a WiFi signal detected by the user; and
   storing a corresponding relationship between the location label of the user and the wireless router MAC address;

   wherein, the login information further comprises a location label modified by the user; and
   the step of storing the corresponding relationship between the location label of the user and the wireless router MAC address comprises:
   storing a corresponding relationship between the location label modified by the user and the wireless router MAC address (711).

2. The WiFi signal-based positioning method according to claim 1, wherein,
the WiFi signal information comprises at least one WiFi signal detected by the user; and
the step of acquiring the location label information of the current location of the user according to the WiFi signal information comprises:

measuring signal strength of the WiFi signal and acquiring a corresponding wireless router MAC address according to the at least one WiFi signal detected by the user (606); and
searching for a corresponding relationship between the wireless router MAC address and the location label according to the signal strength of the WiFi signal and the wireless router MAC address to obtain the location label information of the current location of the user (614, 812), the location label information comprising location label + offset.

3. A WiFi signal-based positioning device, comprising a receiving module, an acquisition module and a sending module, wherein:

the receiving module (20) is arranged to receive a positioning request of a user, the positioning request comprising WiFi signal information of a current location of the user;
the acquisition module (22) is arranged to acquire location label information of the current location of the user according to the WiFi signal information; and
the sending module (24) is arranged to send acquired location label information to the user;
wherein:

the WiFi signal information comprises a WiFi signal accessed by the user, and the acquisition module is arranged to acquire the location label information of the current location of the user according to the WiFi signal information according to a following mode:

acquiring a wireless router MAC address corresponding to the WiFi signal accessed by the user;
searching for a corresponding relationship between the wireless router MAC address and the location label; and
determining the location label corresponding to the wireless router MAC address to be the location label information of the current location of the user;

**characterized in that**,
the positioning device further comprises a registration module, wherein:

the registration module is arranged to receive and save registration information of the user sent through a mobile network or a WiFi network, the registration information comprising at least a username, a user password, a user type and a location label of the user;
wherein the positioning device further comprises a login module, wherein: the login module is arranged to receive login information of the user sent through the mobile network or the WiFi network and store a corresponding relationship between the location label of the user and the wireless router MAC address, wherein the login information carries a wireless router MAC address of a WiFi signal detected by the user;
wherein: the login information further comprises a location label modified by the user; and the device further comprises an update module, wherein: the update module is arranged to store a corresponding relationship between the location label modified by the user and the wireless router MAC address;
wherein the location label comprises:

city name + area name + community name + room number;

or

city name + area name + commercial street name + commercial building name + shop number + shop name.

4. The WiFi signal-based positioning device according to claim 3,
the WiFi signal information comprises at least one WiFi signal detected by the user, and the acquisition module is arranged to acquire the location label information of the current location of the user according to the WiFi signal information according to a following mode:

measuring signal strength of the WiFi signal and acquiring a corresponding wireless router MAC address according to the at least one WiFi signal detected by the user; and
searching for a corresponding relationship between the wireless router MAC address and the location label according to the signal strength of the WiFi signal and the wireless router MAC address to obtain the location label information of the current location of the user, the location label information comprising location label + offset.

5. A WiFi signal-based positioning system, comprising a client and a Location-based Service LBS positioning management platform, wherein:

the client is arranged to send a positioning request of a user to the LBS positioning management platform; and
the LBS positioning management platform is arranged to receive the positioning request of the user, acquire location label information of a current location of the user according to the WiFi signal information, and send acquired location label information to the user through the client, wherein the positioning request comprises WiFi signal information of the current location of the user;
wherein,
the WiFi signal information comprises a WiFi signal accessed by the user; and
the LBS positioning management platform is arranged to acquire the location label information of the current location of the user according to the WiFi signal information according to a following mode:

acquiring a wireless router MAC address corresponding to the WiFi signal accessed by the user;
searching for a corresponding relationship between the wireless router MAC address and the location label; and
determining the location label corresponding to the wireless router MAC address to be the location label information of the current location of the user;

**characterized in that**,
the client is further arranged to send registration information or login information of the user to the LBS positioning management platform through a mobile network or a WiFi network, wherein the registration information comprises at least a username, a user password, a user type and a location label or the user, wherein the location label comprises:city name + area name + community name + room number; or city name + area name + commercial street name + commercial building name + shop number + shop name, and the login information carries a wireless router MAC address of a WiFi signal detected by the user;
the LBS positioning management platform is further arranged to receive the registration information or the login information, and establish a corresponding relationship between the location label of the user and the wireless router MAC address; and
the system further comprises an LBS positioning service database, wherein:

the LBS positioning service database is arranged to store the corresponding relationship between the location label of the user and the wireless router MAC address;
wherein:

the login information further comprises a location label modified by the user;
the LBS positioning management platform is further arranged to establish a corresponding relationship between the location label modified by the user and the wireless router MAC address; and
the LBS positioning service database is further arranged to store the corresponding relationship between the location label modified and the wireless router MAC address.

6. A computer program, **characterized by** comprising program instructions, which, when executed by a WiFi signal positioning device, enable the WiFi signal positioning device to be capable of executing the WiFi signal positioning method according to claim 1 or 2.

**7.** A carrier **characterized by** carrying the computer program according to claim 6.

**Patentansprüche**

**1.** Auf einem WiFi-Signal basierendes Positionierungsverfahren, umfassend:

Empfangen (101) einer Positionierungsanforderung eines Benutzers, wobei die Positionierungsanforderung WiFi-Signalinformationen eines aktuellen Standorts des Benutzers umfasst;
das Verfahren ferner Folgendes umfasst:

Erfassen (102) von Standortkennzeichnungsinformationen des aktuellen Standorts des Benutzers gemäß den WiFi-Signalinformationen; und
Senden (103) von erfassten Standortkennzeichnungsinformationen an den Benutzer;
wobei
die WiFi-Signalinformationen ein WiFi-Signal umfassen, auf das der Benutzer zugreift; und
der Schritt des Erfassens von Standortkennzeichnungsinformationen des aktuellen Standorts des Benutzers gemäß den WiFi-Signalinformationen umfasst
Erfassen (603) einer MAC-Adresse eines drahtlosen Routers, die dem WiFi-Signal entspricht, auf das der Benutzer zugreift;
Suchen nach einer entsprechenden Beziehung zwischen der MAC-Adresse des drahtlosen Routers und der Standortkennzeichnung (610); und
Bestimmen der Standortkennzeichnung, die der MAC-Adresse des drahtlosen Routers entspricht, als Standortkennzeichnungsinformationen des aktuellen Standorts des Benutzers (610);

**dadurch gekennzeichnet, dass**,
vor dem Schritt des Empfangens der Positionierungsanforderung des Benutzers, das Positionierungsverfahren ferner umfasst:

Empfangen (408) und Speichern (409) von Registrierungsinformationen des Benutzers, die über ein Mobilfunknetzwerk oder ein WiFi-Netzwerk gesendet werden, wobei die Registrierungsinformationen mindestens einen Benutzernamen, ein Benutzerpasswort, einen Benutzertyp und eine Standortkennzeichnung des Benutzers umfassen;
wobei die Standortkennzeichnung umfasst:

Name der Stadt + Name des Gebiets + Name der Gemeinde + Zimmernummer; oder
Name der Stadt + Name des Gebiets + Name der Geschäftsstraße + Name des Geschäftsgebäudes + Geschäftsnummer + Name des Geschäfts;

nach dem Schritt des Empfangens und Speicherns der Registrierungsinformationen des Benutzers, das Positionierungsverfahren ferner umfasst:

Empfangen (502, 707, 806) von Anmeldeinformationen des Benutzers, die über das Mobilfunknetzwerk oder das WiFi-Netzwerk gesendet werden, wobei die Anmeldeinformationen eine MAC-Adresse des drahtlosen Routers eines vom Benutzer erkannten WiFi-Signals tragen; und
Speichern einer entsprechenden Beziehung zwischen der Standortkennzeichnung des Benutzers und der MAC-Adresse des drahtlosen Routers;

wobei die Anmeldeinformationen ferner eine vom Benutzer modifizierte Standortkennzeichnung umfassen; und
der Schritt des Speicherns der entsprechenden Beziehung zwischen der Standortkennzeichnung des Benutzers und der MAC-Adresse des drahtlosen Routers umfasst:
Speichern einer entsprechenden Beziehung zwischen der von dem Benutzer modifizierten Standortkennzeichnung und der MAC-Adresse (711) des drahtlosen Routers.

2. Auf dem WiFi-Signal basierendes Positionierungsverfahren nach Anspruch 1, wobei
die WiFi-Signalinformationen mindestens ein WiFi-Signal umfassen, das von dem Benutzer detektiert wird; und
der Schritt des Erfassens von Standortkennzeichnungsinformationen des aktuellen Standorts des Benutzers gemäß den WiFi-Signalinformationen umfasst
Messen der Signalstärke des WiFi-Signals und Erfassen einer entsprechenden MAC-Adresse des drahtlosen Routers gemäß dem mindestens einen WiFi-Signals (606), das von dem Benutzer detektiert wurde; und
Suchen nach einer entsprechenden Beziehung zwischen der MAC-Adresse des drahtlosen Routers und der Standortkennzeichnung gemäß der Signalstärke des WiFi-Signals und der MAC-Adresse des drahtlosen Routers, um die Standortkennzeichnungsinformationen des aktuellen Standorts des Benutzers (614, 812) zu erhalten, die Standortkennzeichnungsinformationen, bestehend aus Standortkennzeichnung + Offset.

3. Auf einem WiFi-Signal basierende Positionierungsvorrichtung, umfassend ein Empfangsmodul, ein Erfassungsmodul und ein Sendemodul, wobei:

das Empfangsmodul (20) angeordnet ist, um eine Positionierungsanforderung eines Benutzers zu empfangen, wobei die Positionierungsanforderung WiFi-Signalinformationen eines aktuellen Standorts des Benutzers umfasst;
das Erfassungsmodul (22) angeordnet ist, um Standortkennzeichnungsinformationen des aktuellen Standorts des Benutzers gemäß den WiFi-Signalinformationen zu erfassen;
das Sendemodul (24) angeordnet ist, um erfasste Standortkennzeichnungsinformationen an den Benutzer zu senden;
wobei:

die WiFi-Signalinformationen ein WiFi-Signal umfassen, auf das der Benutzer zugreift, und das Erfassungsmodul angeordnet ist, um die Standortkennzeichnungsinformationen des aktuellen Standorts des Benutzers gemäß der WiFi-Signalinformationen gemäß einem folgenden Modus zu erfassen:

Erfassen einer MAC-Adresse eines drahtlosen Routers, die dem WiFi-Signal entspricht, auf das der Benutzer zugreift;
Suchen nach einer entsprechenden Beziehung zwischen der MAC-Adresse des drahtlosen Routers und der Standortkennzeichnung; und
Bestimmen der Standortkennzeichnung, die der MAC-Adresse des drahtlosen Routers entspricht, als Standortkennzeichnungsinformationen des aktuellen Standorts des Benutzers;

**dadurch gekennzeichnet, dass**,
die Positionierungsvorrichtung ferner ein Registrierungsmodul umfasst, wobei:

das Registrierungsmodul angeordnet ist, um Registrierungsinformationen des Benutzers zu empfangen und zu speichern, die über ein Mobilfunknetzwerk oder ein WiFi-Netzwerk gesendet werden, wobei die Registrierungsinformationen mindestens einen Benutzernamen, ein Benutzerpasswort, einen Benutzertyp und eine Standortkennzeichnung des Benutzers umfassen;
wobei die Positionierungsvorrichtung ferner ein Anmeldemodul umfasst, wobei: das Anmeldemodul angeordnet ist, um Anmeldeinformationen des Benutzers zu empfangen, die über das Mobilfunknetzwerk oder das WiFi-Netzwerk gesendet werden und eine entsprechende Beziehung zwischen der Standortkennzeichnung des Benutzers und der MAC-Adresse des drahtlosen Routers zu speichern, wobei die Anmeldeinformationen eine MAC-Adresse des drahtlosen Routers eines vom Benutzer detektierten WiFi-Signals tragen;
wobei: die Anmeldeinformation ferner eine vom Benutzer modifiziertes Standortkennzeichnung umfasst; und die Vorrichtung ferner ein Aktualisierungsmodul umfasst, wobei: das Aktualisierungsmodul angeordnet ist, eine entsprechende Beziehung zwischen der vom Benutzer modifizierten Standortkennzeichnung und der MAC-Adresse des drahtlosen Routers zu speichern;
wobei die Standortkennzeichnung umfasst:

Name der Stadt + Name des Gebiets + Name der Gemeinde + Zimmernummer;

oder

Name der Stadt + Name des Gebiets + Name der Geschäftsstraße + Name des Geschäftsgebäudes + Geschäftsnummer + Name des Geschäfts;

**4.** Auf dem WiFi-Signal basierendes Positionierungsverfahren nach Anspruch 3,
wobei die WiFi-Signalinformationen ein WiFi-Signal umfassen, auf das der Benutzer zugreift, und das Erfassungsmodul angeordnet ist, um die Standortkennzeichnungsinformationen des aktuellen Standorts des Benutzers gemäß der WiFi-Signalinformationen gemäß einem folgenden Modus zu erfassen:

Messen der Signalstärke des WiFi-Signals und Erfassen einer entsprechenden MAC-Adresse des drahtlosen Routers gemäß dem mindestens eines WiFi-Signals, das von dem Benutzer detektiert wurde; und
Suchen nach einer entsprechenden Beziehung zwischen der MAC-Adresse des drahtlosen Routers und der Standortkennzeichnung gemäß der Signalstärke des WiFi-Signals und der MAC-Adresse des drahtlosen Routers, um die Standortkennzeichnungsinformationen des aktuellen Standorts des Benutzers zu erhalten, die Standortkennzeichnungsinformationen, bestehend aus Standortkennzeichnung + Offset.

**5.** Auf einem WiFi-Signal basierendes Positionierungssystem, das einen Clienten und eine auf einem Standort basierenden Dienst, LBS-Positionierungsverwaltungsplattform umfasst, wobei:

der Client angeordnet ist, eine Positionierungsanforderung eines Benutzers an die LBS-Positionierungsverwaltungsplattform zu senden; und
die LBS-Positionierungsverwaltungsplattform angeordnet ist, um die Positionierungsanforderung des Benutzers zu empfangen, Standortkennzeichnungsinformationen eines aktuellen Standorts des Benutzers gemäß den WiFi-Signalinformationen zu erfassen und erfasste Standortkennzeichnungsinformationen über den Clienten an den Benutzer zu senden, wobei die Positionierungsanforderung WiFi-Signalinformationen des aktuellen Standorts des Benutzers umfasst;
wobei
die WiFi-Signalinformationen ein WiFi-Signal umfassen, auf das der Benutzer zugreift; und
die LBS-Positionierungsverwaltungsplattform angeordnet ist, um die Standortkennzeichnungsinformationen des aktuellen Standorts des Benutzers gemäß den WiFi-Signalinformationen gemäß einem folgenden Modus zu erfassen:

Erfassen einer MAC-Adresse eines drahtlosen Routers, die dem WiFi-Signal entspricht, auf das der Benutzer zugreift;
Suchen nach einer entsprechenden Beziehung zwischen der MAC-Adresse des drahtlosen Routers und der Standortkennzeichnung; und
Bestimmen der Standortkennzeichnung, die der MAC-Adresse des drahtlosen Routers entspricht, als Standortkennzeichnungsinformationen des aktuellen Standorts des Benutzers;

**dadurch gekennzeichnet, dass**
der Client ferner angeordnet ist, um Registrierungsinformationen oder Anmeldeinformationen des Benutzers über ein Mobilfunknetzwerk oder ein WiFi-Netzwerk an die LBS-Positionierungsverwaltungsplattform zu senden, wobei die Registrierungsinformationen mindestens einen Benutzernamen, ein Benutzerpasswort, einen Benutzertyp und eine Standortkennzeichnung des Benutzers umfassen, wobei die Standortkennzeichnung umfasst: Name der Stadt + Name des Gebiets + Name der Gemeinde + Raumnummer; oder Name der Stadt + Name des Gebiets + Name der Geschäftsstraße + Name des Geschäftsgebäudes + Geschäftsnummer + Name des Geschäfts,
und die Anmeldeinformationen eine MAC-Adresse eines drahtlosen Routers eines vom Benutzer detektierten WiFi-Signals tragen;
die LBS-Positionierungsverwaltungsplattform ferner angeordnet ist, um die Registrierungsinformationen oder die Anmeldeinformationen zu empfangen und eine entsprechende Beziehung zwischen der Standortkennzeichnung des Benutzers und der MAC-Adresse des drahtlosen Routers herzustellen; und
das System ferner eine LBS-Positionierungsdienstdatenbank umfasst, wobei:

die LBS-Positionierungsdienstdatenbank angeordnet ist, um die entsprechende Beziehung zwischen der Standortkennzeichnung des Benutzers und der MAC-Adresse des drahtlosen Routers zu speichern;
wobei:

die Anmeldeinformationen ferner eine vom Benutzer modifizierte Standortkennzeichnung umfassen; die LBS-Positionierungsverwaltungsplattform ferner angeordnet ist, um eine entsprechende Beziehung zwischen der von dem Benutzer modifizierten Standortkennzeichnung und der MAC-Adresse des drahtlosen Routers herzustellen; und

die LBS-Positionierungsdienstdatenbank ferner angeordnet ist, um die entsprechende Beziehung zwischen der modifizierten Standortkennzeichnung und der MAC-Adresse des drahtlosen Routers zu speichern;

**6.** Computerprogramm, **gekennzeichnet durch** Umfassen von Programmanweisungen, die, wenn sie von einer WiFi-Signalpositionierungsvorrichtung ausgeführt werden, ermöglichen, dass die WiFi-Signalpositionierungsvorrichtung das WiFi-Signalpositionierungsverfahren nach Anspruch 1 oder 2 ausführen kann.

**7.** Träger, **gekennzeichnet durch** Tragen des Computerprogramms nach Anspruch 6.

**Revendications**

**1.** Procédé de positionnement à base de signal WiFi, comprenant :

la réception (101) d'une demande de positionnement d'un utilisateur, la demande de positionnement comprenant des informations de signal WiFi d'une localisation actuelle de l'utilisateur ; le procédé comprend en outre :

l'acquisition (102) d'informations d'identité de localisation de la localisation actuelle de l'utilisateur en fonction des informations de signal WiFi ; et l'envoi (103) d'informations d'identité de localisation acquises à l'utilisateur ; les informations de signal WiFi comprenant un signal WiFi accessible par l'utilisateur ; et

l'étape d'acquisition des informations d'identité de localisation de la localisation actuelle de l'utilisateur en fonction des informations de signal WiFi comprenant :

l'acquisition (603) d'une adresse MAC de routeur sans fil correspondant au signal WiFi accessible par l'utilisateur ; la recherche d'une relation correspondante entre l'adresse MAC de routeur sans fil et l'identité de localisation (610) ; et la détermination de l'identité de localisation correspondant à l'adresse MAC de routeur sans fil comme étant les informations d'identité de localisation de la localisation actuelle de l'utilisateur (610) ;

**caractérisé en ce que**, avant l'étape de réception de la demande de positionnement de l'utilisateur, le procédé de positionnement comprend en outre :

la réception (408) et la sauvegarde (409) d'informations d'enregistrement de l'utilisateur envoyées par le biais d'un réseau mobile ou d'un réseau WiFi, les informations d'enregistrement comprenant au moins un nom d'utilisateur, un mot de passe d'utilisateur, un type d'utilisateur et une identité de localisation de l'utilisateur ; l'identité de localisation comprenant :

nom de ville + nom de région + nom de communauté + numéro de chambre ; ou nom de ville + nom de région + nom de rue commerçante + nom du bâtiment commercial + numéro du magasin + nom du magasin ;

après l'étape de réception et de sauvegarde des informations d'enregistrement de l'utilisateur, le procédé de positionnement comprenant en outre :

la réception (502, 707, 806) d'informations de connexion de l'utilisateur envoyées par le biais du réseau mobile ou du réseau WiFi, les informations de connexion portant une adresse MAC de routeur sans fil d'un signal WiFi détecté par l'utilisateur ; et

le stockage d'une relation correspondante entre l'identité de localisation de l'utilisateur et l'adresse MAC de routeur sans fil ;

les informations de connexion comprenant en outre une identité de localisation modifiées par l'utilisateur ; et l'étape de stockage de la relation correspondante entre l'identité de localisation de l'utilisateur et de l'adresse MAC de routeur sans fil comprenant :
le stockage d'une relation correspondante entre l'identité de localisation modifiée par l'utilisateur et l'adresse MAC de routeur sans fil (711).

2. Procédé de positionnement à base de signal WiFi selon la revendication 1, dans lequel,
les informations de signal WiFi comprennent au moins un signal WiFi détecté par l'utilisateur ; et
l'étape d'acquisition des informations d'identité de localisation de la localisation actuelle de l'utilisateur en fonction des informations de signal WiFi comprend :

la mesure d'une force de signal du signal WiFi et l'acquisition d'une adresse MAC de routeur sans fil correspondante en fonction de l'au moins un signal WiFi détecté par l'utilisateur (606) ; et
la recherche d'une relation correspondante entre l'adresse MAC de routeur sans fil et l'identité de localisation en fonction de la force de signal du signal WiFi et l'adresse MAC de routeur sans fil pour obtenir les informations d'identité de localisation de la localisation actuelle de l'utilisateur (614, 812), les informations d'identité de localisation comprenant l'identité de localisation + décalage.

3. Dispositif de positionnement à base de signal WiFi, comprenant un module de réception, un module d'acquisition et un module d'envoi, dans lequel :

le module de réception (20) est conçu pour recevoir une demande de positionnement d'un utilisateur, la demande de positionnement comprenant des informations de signal WiFi d'une localisation actuelle de l'utilisateur ;
le module d'acquisition (22) est conçu pour acquérir des informations d'identité de localisation de la localisation actuelle de l'utilisateur en fonction des informations de signal WiFi ; et
le module d'envoi (24) est conçu pour envoyer des informations d'identité de localisation acquises à l'utilisateur ;
les informations de signal WiFi comprenant un signal WiFi accessible par l'utilisateur, et le module d'acquisition étant conçu pour acquérir les informations d'identité de localisation de la localisation actuelle de l'utilisateur en fonction des informations de signal WiFi en fonction d'un mode suivant :

l'acquisition d'une adresse MAC de routeur sans fil correspondant au signal WiFi accessible par l'utilisateur ;
la recherche d'une relation correspondante entre l'adresse MAC de routeur sans fil et l'identité de localisation ; et
la détermination de l'identité de localisation correspondant à l'adresse MAC de routeur sans fil comme constituant les informations d'identité de localisation de la localisation actuelle de l'utilisateur ;

**caractérisé en ce que**,
le dispositif de positionnement comprend en outre un module d'enregistrement,
le module d'enregistrement est conçu pour recevoir et sauvegarder des informations d'enregistrement de l'utilisateur envoyées par le biais d'un réseau mobile ou d'un réseau WiFi, les informations d'enregistrement comprenant au moins un nom d'utilisateur, un mot de passe d'utilisateur, un type d'utilisateur et une identité de localisation de l'utilisateur ;
le dispositif de positionnement comprenant en outre un module de connexion, le module de connexion étant conçu pour recevoir des informations de connexion de l'utilisateur envoyées par le biais du réseau mobile ou du réseau WiFi et stocker une relation correspondante entre l'identité de localisation de l'utilisateur et l'adresse MAC de routeur sans fil, les informations de connexion transportant une adresse MAC de routeur sans fil d'un signal WiFi détecté par l'utilisateur ;
les informations de connexion comprenant en outre une identité de localisation modifiée par l'utilisateur ; et le dispositif comprenant en outre un module de mise à jour, le module de mise à jour étant conçu pour stocker une relation correspondante entre l'identité de localisation modifiée par l'utilisateur et l'adresse MAC de routeur sans fil ;
l'identité de localisation comprenant :

nom de ville + nom de région + nom de communauté + numéro de chambre ;

ou

nom de ville + nom de région + nom de rue commerçante + nom du bâtiment commercial + numéro de magasin + nom de magasin.

4. Dispositif de positionnement à base de signal WiFi selon la revendication 3,
les informations de signal WiFi comprenant au moins un signal WiFi détecté par l'utilisateur, et le module d'acquisition étant conçu pour acquérir les informations d'identité de localisation de la localisation actuelle de l'utilisateur en fonction des informations de signal WiFi en fonction d'un mode suivant :

la mesure d'une force de signal du signal WiFi et l'acquisition d'une adresse MAC de routeur sans fil correspondante en fonction de l'au moins un signal WiFi détecté par l'utilisateur ; et
la recherche d'une relation correspondante entre l'adresse MAC de routeur sans fil et l'identité de localisation en fonction de la force de signal du signal WiFi et l'adresse MAC de routeur sans fil pour obtenir les informations d'identité de localisation de la localisation actuelle de l'utilisateur, les informations d'identité de localisation comprenant l'identité de localisation + décalage.

5. Système de positionnement à base de signal WiFi, comprenant un client et une plateforme de gestion de positionnement de service géodépendant (LBS),
le client étant conçu pour envoyer une demande de positionnement d'un utilisateur à la plateforme de gestion de positionnement de LBS ; et
la plateforme de gestion de positionnement de LBS étant conçue pour recevoir la demande de positionnement de l'utilisateur, acquérir des informations d'identité de localisation d'une localisation actuelle de l'utilisateur en fonction des informations de signal WiFi, et envoyer des informations d'identité de localisation acquises à l'utilisateur par l'intermédiaire du client, la demande de positionnement comprenant des informations de signal WiFi de la localisation actuelle de l'utilisateur ;
les informations de signal WiFi comprenant un signal WiFi accessible par l'utilisateur ; et
la plateforme de gestion de positionnement de LBS étant conçue pour acquérir les informations d'identité de localisation de la localisation actuelle de l'utilisateur en fonction des informations de signal WiFi en fonction d'un mode suivant :

l'acquisition d'une adresse MAC de routeur sans fil correspondant au signal WiFi accessible par l'utilisateur ;
la recherche d'une relation correspondante entre l'adresse MAC de routeur sans fil et l'identité de localisation ; et
la détermination de l'identité de localisation correspondant à l'adresse MAC de routeur sans fil comme constituant les informations d'identité de localisation de la localisation actuelle de l'utilisateur ;
**caractérisé en ce que**,
le client est en outre conçu pour envoyer des informations d'enregistrement ou des informations de connexion de l'utilisateur à la plateforme de gestion de positionnement de LBS par le biais d'un réseau mobile ou d'un réseau WiFi, les informations d'enregistrement comprenant au moins un nom d'utilisateur, un mot de passe d'utilisateur, un type d'utilisateur et une identité de localisation de l'utilisateur, l'identité de localisation comprenant : nom de ville + nom de région + nom de communauté + numéro de chambre ; ou nom de ville + nom de région + nom de rue commerçante + nom de bâtiment commercial + numéro de magasin + nom de magasin,
et les informations de connexion portent une adresse MAC de routeur sans fil d'un signal WiFi détecté par l'utilisateur ;
la plateforme de gestion de positionnement de LBS est en outre conçue pour recevoir les informations d'enregistrement ou les informations de connexion, et établir une relation correspondante entre l'identité de localisation de l'utilisateur et l'adresse MAC de routeur sans fil ; et
le système comprend en outre une base de données de service de positionnement de LBS,
la base de données de service de positionnement de LBS étant conçue pour stocker la relation correspondante entre l'identité de localisation de l'utilisateur et l'adresse MAC de routeur sans fil ;
les informations de connexion comprenant en outre une identité de localisation modifiée par l'utilisateur ;

la plateforme de gestion de positionnement de LBS étant en outre conçue pour établir une relation correspondante entre l'identité de localisation modifiée par l'utilisateur et l'adresse MAC de routeur sans fil ; et la base de données de service de positionnement de LBS étant en outre conçue pour stocker la relation correspondante entre l'identité de localisation modifiée et l'adresse MAC de routeur sans fil.

6. Programme informatique, **caractérisé en ce qu'**il comprend des instructions de programme, qui, lorsqu'exécutées par un dispositif de positionnement de signal WiFi, permettent au dispositif de positionnement de signal WiFi d'être capable d'exécuter le procédé de positionnement de signal WiFi selon la revendication 1 ou 2.

7. Support **caractérisé par** le fait de contenir le programme informatique selon la revendication 6.

```
┌─────────────────────────────────────────────┐
│  Receive a positioning request including WiFi │      101
│  signal information of a current location of the user │
└─────────────────────────────────────────────┘
                      │
                      ▼
┌─────────────────────────────────────────────┐
│  Acquire location label information of the current │   102
│  location of the user according to the WiFi signal │
│                  information                   │
└─────────────────────────────────────────────┘
                      │
                      ▼
┌─────────────────────────────────────────────┐
│        Send the acquired location label        │       103
│          information to the user              │
└─────────────────────────────────────────────┘
```

FIG. 1

```
      20                    22                    24
┌──────────────┐    ┌──────────────┐    ┌──────────────┐
│  Receiving   │────│ Acquisition  │────│   Sending    │
│   module     │    │   module     │    │   module     │
└──────────────┘    └──────────────┘    └──────────────┘
```

FIG. 2

FIG. 3

Start client based on mobile
network or WiFi network — 401

Enter registration mode — 402

Select registered user type — 403

Individual house user (user number,
user password, house address
information) — 404

Shop user (user number, user password,
house address information, shop address
information) — 406

Assemble registration message
(Userid, Pwd, Usertype, HouseAdd,
etc.) — 405

Assemble registration message
(Userid, Pwd, Usertype,
HouseAdd, ShopAdd) — 407

Registration information
reporting

LBS positioning management platform performs parsing to acquire user
registration information — 408

LBS positioning service database saves user information
(userid, userpwd, usertype, location label information) — 409

FIG. 4

Start client based on the WiFi
network which can be detected — 501

Enter login and user
fills userid/userpwd — 502

Select login mode — 503

WiFi access
login mode — 504

Shop mode
logintype=1

House mode
logintype=2

Other mode
logintype=3

WiFi detection
login mode
logintype=17 — 507

Client acquires WiFi signal
Mac address — 505

Assemble login message
(userid/userpwd/
logintype/macAdd) — 506

Assemble login message
(userid/userpwd/logintype) — 508

LBS positioning management platform parses message
and performs the following processing according to logintype — 509

Shop mode or
house mode — 510

Other mode or WiFi
detection mode — 513

First perform authentication, then
query shop or house location label
in database according to userid — 511

Update corresponding relationship
between Mac address and shop or
house location label in database — 512

Parse message and perform
authentication — 514

Update user login state and feed login success response back to user — 515

FIG. 5

601 Select positioning mode

602 WiFi access positioning mode loctype=1

605 WiFi detection mode loctype=2

603 Client acquires accessed WiFi signal Mac address

606 Measure strongest WiFi signal, acquire corresponding Mac address (at least one, at most five, a number of WiFi networks is optimally odd and defaulted to be 3)

604 Assemble LocReq message (userid/loctype/macAdd)

607 Assemble LocReq message (userid/loctype=1⁷/macadd1/ sigpower1/macadd2/sigpowder2/ macadd3/sigpower3...)

608 LBS positioning management platform parses message and performs the following processing according to loctype after authentication

609 WiFi access positioning mode loctype=1

612 WiFi detection mode loctype=2

610 Query location label in database according to Mac address

613 Query a plurality of location labels in database according to Mac addresses

614 Call location label matching algorithm to obtain unique location label + offset according to location label information and WiFi signal strength

611 Feed current user location label back to client

615 Feed current user location label + offset back to client

FIG. 6

| Client | LBS positioning management platform | LBS positioning service database |
|---|---|---|

701.User logs in (user number, password)

702.Judge whether WiFi signal can be detected, if WiFi signal can be detected, continue, and otherwise log out

703.Select WiFi access positioning mode

704.Judge whether user has already accessed to WiFi network, if yes, continue, if no, prompt that WiFi network needs to be accessed and log out

705.Acquire Mac address of accessed WiFi signal

706.Assemble login message (carrying Mac address and location label information)

707.Send login request message

708.Parse login message (to acquire user number, password, Mac address, location label information, etc.)

709.Call authentication storage process

710.User number authentication succeeds

711.Update corresponding relationship between Mac address and location label information

712.Update succeeds

713.Assemble message and feed back location label information

714.Feed back login response

715.Acquire current location label information

716.Initiate various location service requests

717.Process location service requests

718.Complete subsequent interaction process of location services

FIG. 7

| Client | LBS positioning management platform | LBS positioning service database |
|---|---|---|

801.User logs in (user number, password)

802.Judge whether WiFi signal can be detected, if WiFi signal can be detected, continue, and otherwise, log out

803.Select WiFi detection positioning mode

804.Acquire Mac addresses of at most three strongest WiFi signals and measure and compute WiFi signal strength

805.Assemble login message (carrying Mac address and signal strength information)

806.Send login request message

807.Parse login message (to acquire user number, password, Mac address, WiFi signal strength information, etc.)

808.Call authentication storage process

809.User number authentication succeeds

810.Query location label information according to Mac address

811.Feed location label informatioVn back

812.Acquire final location label information (a piece of location label information + offset) by adopting LBS positioning matching algorithm according to WiFi signal strength and location label information parameters

813.Feed back login response

814.Acquire current location label information

815.Initiate various location service requests

816.Process location service requests

817.Complete subsequent interaction process of location services

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120244875 A1
- WO 2013188717 A2
- CN 103841642 A
- CN 103796163 A